# FASCICULE DE BREVET EUROPEEN

(11) **EP 0 629 037 B1**
(45) Date de publication et mention de la délivrance du brevet: **29.08.2001**
(21) Numéro de dépôt: 94401202.0
(22) Date de dépôt: 31.05.1994
(51) Int. Cl.: H02P 7/622

(54) **Procédé et dispositif de régulation de l'alimentation d'un moteur électrique asynchrone**
Verfahren und Vorrichtung zur Regelung der Stromversorgung eines Asynchronmotors
Power supply control process and device for an electric asynchronous motor

(30) Priorité: 08.06.1993 FR 9306839
(43) Date de publication de la demande: 14.12.1994
(73) Titulaire: POMPES SALMSON Société Anonyme à directoire dite:, 92504 Rueil Malmaison (FR)
(72) Inventeur: Pottier, Xavier, F-53260 Montigne-le-Brillant (FR); Kernours, Michel, F-35370 Mondevert (FR); Mazuir, Maurice, F-38330 Saint Ismier (FR)
(74) Mandataire: Hirsch, Marc-Roger

(56) Documents cités:
- EP-A- 0 054 446
- EP-A- 0 311 031
- DE-A- 3 120 141
- US-A- 4 412 167
- US-A- 4 806 838
- ELEKTROTECHNISCHE ZEITSCHRIFT ETZ, vol.100, no.24, Novembre 1979, DE pages 1397 - 1398 'WIE MAN MOTOR-BLINDLEISTUNG REDUZIERT'
- PATENT ABSTRACTS OF JAPAN vol. 10, no. 263 (E-435) (2319) 9 Septembre 1986 & JP-A-61 088 788 (MATSUSHITA ELECTRIC IND CO LTD)
- MESURES REGULATION AUTOMATISME, no.1, Janvier 1982, PARIS FR pages 29 - 34 'POUR AMELIORER LE RENDEMENT DE VOS MOTEURS REGULEZ LE COS PHI'

## Description

La présente invention se rapporte à un procédé de régulation de l'alimentation d'un moteur électrique asynchrone monophasé du type à phase principale et à phase auxiliaire permanente. Elle concerne également l'application de ce procédé au contrôle des moteurs de pompe, le dispositif de régulation pour la mise en oeuvre de ce procédé, ainsi que le procédé de contrôle de l'alimentation en courant alternatif du moteur électrique d'une pompe ou autre machine à fluide dans lequel on compare l'angle de déphasage mesuré d'au moins une phase d'alimentation électrique dudit moteur avec une valeur de référence.

On connaît à l'heure actuelle de nombreux dispositifs de contrôle électronique de la vitesse et/ou de la charge des moteurs électriques asynchrones. Certains de ces dispositifs parmi les plus performants et qui sont utilisés par exemple pour la traction ferroviaire, réalisent un pilotage électronique de la fréquence et de la tension du courant alternatif triphasé alimentant un ou plusieurs moteurs asynchrones. Du fait de leur coût, de tels dispositifs ne peuvent pas être utilisés économiquement pour la régulation des pompes, en particulier des circulateurs domestiques pour les installations de chauffage.

On commence par ailleurs à utiliser, pour la régulation de la vitesse et/ou de la charge des pompes domestiques, des régulateurs de tension à découpage qui permettent un réglage continu de la vitesse de la pompe dans une gamme de vitesses acceptable pour le moteur asynchrone à tube d'entrefer servant à l'entraînement du rotor de la pompe. De tels régulateurs agissent sur la tension d'alimentation de la pompe, des tensions croissantes autorisant des vitesses de rotation croissantes pour le rotor de pompe mais provoquant, du fait de l'augmentation des pressions et/ou des débits de refoulement de la pompe, une consommation croissante de puissance électrique.

Le besoin s'est exprimé récemment de disposer à la fois d'une régulation électronique de la vitesse de rotation de la pompe et d'une régulation automatique de la vitesse et de la charge de la pompe qui soit adaptable de façon quasi-instantanée aux conditions hydrauliques du circuit de refoulement de la pompe. En effet, si dans une installation de chauffage à pompe de circulation, telle qu'existant actuellement, les utilisateurs (ou la régulation automatique par thermostats) ferment tous leur circuit de radiateur de chauffage (par exemple parce que la température intérieure augmente rapidement du fait de l'ensoleillement), la circulation de fluide de chauffage s'interrompt dans les radiateurs mais la pompe de circulation continue à tourner à vitesse élevée, en engendrant par exemple, dans un seul radiateur resté ouvert, une circulation d'eau à grande vitesse, génératrice de bruit et, dans certains cas, d'abrasions par les particules alors mises en circulation par les débits élevés traversant le radiateur resté ouvert.

On a déjà proposé pour remédier à cet inconvénient un dispositif de régulation de la tension d'alimentation du moteur électrique de la pompe qui tende à stabiliser la pression de refoulement de la pompe. De tels dispositifs se révèlent fiables et avantageux mais nécessitent l'installation d'un circuit de mesure de la pression de refoulement couplé à la régulation électronique de la pompe. L'installation d'un tel circuit se révèle non seulement onéreuse mais peu fiable dans le temps pour des dispositifs de pompage dont les durées de vie sans incident dépasse maintenant la dizaine d'années.

Par ailleurs, US-A-4 806 838 décrit un procédé et un dispositif de régulation de l'alimentation d'un moteur électrique monophasé utilisé pour l'entraînement du compresseur d'un groupe de réfrigération. Le moteur électrique comporte, d'une part, un bobinage de démarrage couplé à un condensateur (et formant donc phase auxiliaire) et à un interrupteur centrifuge de démarrage et, d'autre part, un bobinage principal et un bobinage auxiliaire qui constituent ainsi, pendant le démarrage du moteur, une phase principale et, après le démarrage du moteur, la phase unique d'un moteur monophasé simple. Un détecteur détecte le déphasage du courant qui parcourt le bobinage principal par rapport à la tension aux bornes de ce bobinage principal et émet un signal de déphasage qui pilote un organe de commande d'une alimentation à découpage du bobinage auxiliaire. Pour de faibles charges du moteur, seul le bobinage principal est alimenté sous la pleine tension du réseau et le déphasage au capteur est, par exemple, de l'ordre de 40°. Pour des charges croissantes du moteur, le déphasage mesuré par le détecteur diminue tandis que l'alimentation à découpage laisse passer des parties d'alternances croissantes de l'alimentation du réseau sur le bobinage auxiliaire, jusqu'à la pleine alimentation du réseau pour un déphasage au détecteur (sur le bobinage principal) réduit à 20°.

Ce système de régulation de l'alimentation d'un moteur électrique monophasé qui ne comporte pas de phase auxiliaire permanente présente divers inconvénients lorsqu'on veut l'utiliser pour des moteurs d'entraînement de pompes dont le couple résistant varie sensiblement comme le carré de la vitesse de rotation, au lieu de diminuer légèrement, comme dans le cas des compresseurs frigorifiques. Tout d'abord, il nécessite l'installation d'un bobinage auxiliaire en plus du bobinage de phase auxiliaire à condensateur des moteurs de pompe, servant à la fois au démarrage et à l'amélioration du cos ϕ en régime permanent. Ensuite, la régulation de tension n'intervient pas sur le bobinage de phase principale qui consomme la plus grande partie de la puissance fournies par le réseau alors que, dans un groupe motopompe, la puissance consommée par la pompe diminue fortement dès que la vitesse de rotation de la pompe diminue (la puissance consommée et sensiblement proportionnelle au cube de la vitesse de rotation).

Le document EP-A-311031 décrit un procédé de régulation de la vitesse de rotation d'un moteur à courant alternatif monophasé du type à phase principale et à phase auxiliaire dans lequel on alimente en permanence la phase auxiliaire et on commande un interrupteur permettant d'alimenter la phase principale, en provoquant périodiquement la fermeture de l'interrupteur pendant une durée donnée en fonction de la vitesse de rotation ou de la charge.

Le document US-A-4806838 décrit un procédé de régulation de la puissance pour un moteur électrique en fonction de la charge déterminée par les variations du facteur de puissance dans lequel le moteur comprend un bobinage principal alimenté directement par une source de courant alternatif et un bobinage secondaire couplé de façon variable à la source de courant alternatif en fonction du facteur de puissance mesuré.

La présente invention vise à contrôler les situations de marche à vide ou sans débit dans les groupes motopompes ou motoventilateurs sans avoir à utiliser de capteurs onéreux à installer. Elle vise également à éviter les à-coups de circulation se produisant sur les circuits de pompage (y compris les circuits autres que les circuits de chauffage) même en cas de modification rapide de la configuration du circuit, à l'aide d'un procédé et d'un dispositif de régulation simples, fiables et peu onéreux et qui permettent de réaliser des économies d'énergie électrique importantes et une utilisation optimale du réseau électrique d'alimentation. Pour cela, l'invention utilise la mesure du cosinus ϕ ou de l'angle de déphasage ϕ de l'une des phases du moteur électrique asynchrone, associé à de nouvelles dispositions de régulation.

Cet objet est résolu par les caractéristiques des revendications independantes 1, 9-11, 13 et 16. Les revendications dépendantes concernent d'autre modes de réalisation de l'objet des revendications indépendantes.

D'autres buts, avantages et caractéristiques apparaîtront à la lecture de la description de divers modes de réalisation de l'invention, faite à titre non limitatif et en regard du dessin annexé, dans lequel:
- la figure 1 représente schématiquement un dispositif de régulation selon l'invention de l'alimentation du moteur électrique asynchrone triphasé d'un ensemble motogénérateur de pression et/ou de débit de fluide;
- la figure 2 représente schématiquement un dispositif de régulation selon l'invention pour un moteur électrique asynchrone monophasé à phase auxiliaire à condensateur, utilisé pour l'entraînement d'une pompe de circulation d'eau;
- la figure 3 est un schéma électrique et électronique plus détaillé, utilisable pour le dispositif de régulation de la figure 2;
- la figure 4 représente graphiquement: en 4a le mode de découpage d'une alternance du courant électrique monophasé à l'entrée du circuit d'alimentation du moteur électrique contrôlé selon les schémas de régulation des figures 2 et 3, et en 4b la variation sinusoïdale ou quasi-sinusoïdale d'une alternance du courant électrique parcourant la phase principale du moteur électrique monophasé régulé selon les schémas des figures 2 et 3;
- la figure 5 représente graphiquement une courbe d'asservissement pression-débit obtenue par stabilisation du cos ϕ de la phase principale d'un moteur électrique monophasé d'entraînement de pompe dont la tension d'alimentation est régulée selon les schémas des figures 2 et 3;
- la figure 6 représente graphiquement un cycle de régulation automatique pression-débit utilisant des plages successives d'asservissement, à cos ϕ ou à déphasage ϕ constant selon l'invention, pour un groupe motopompe entraîné par un moteur électrique monophasé alimenté sous la fréquence et la tension du réseau, lorsque le circuit de refoulement de la pompe, par exemple un circuit de circulation d'eau de chauffage, est modifié;
- la figure 7 représente schématiquement un groupe de pompe d'exhaure à moteur électrique asynchrone monophasé utilisant le procédé et le dispositif de régulation selon l'invention, à détection de la valeur du cos ϕ ou du déphasage ϕ de la phase principale; et
- la figure 8 représente schématiquement le circuit de régulation marche-arrêt du groupe de pompe d'exhaure de la figure 7.

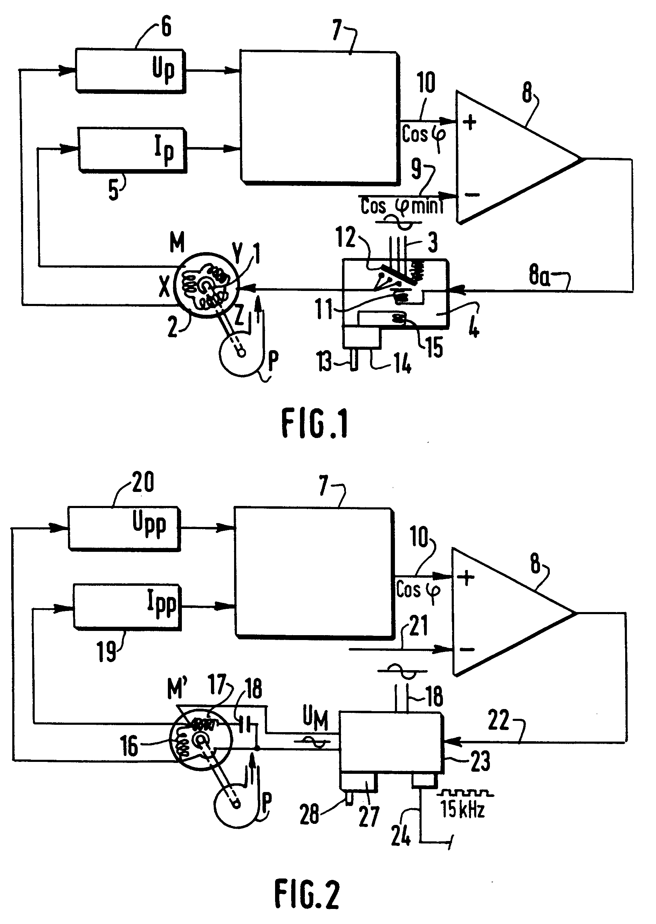

On a représenté schématiquement sur la figure 1 un moteur électrique asynchrone triphasé M d'entraînement d'une pompe ou d'un ventilateur P. Ce moteur comporte, de façon classique, un rotor 1 à cage d'écureuil couplé mécaniquement au rotor de pompe ou de ventilateur et un stator 2 qui contient trois bobinages de phase X, Y, Z branchés selon un schéma d'alimentation adéquat (on a représenté ici un branchement en triangle, le branchement en étoile étant également possible) sur un réseau d'alimentation 3, constitué en général par le secteur triphasé 220/380 V, par l'intermédiaire d'un interrupteur de tension 4.

L'alimentation des bobinages du moteur asynchrone triphasé par la tension triphasée du réseau est fonction de l'obtention d'une valeur minimale ou de seuil du cos ϕ global aux bornes du moteur électrique. La valeur du cos ϕ global du moteur qui serait assez onéreuse à établir est remplacée ici par la valeur du cos ϕ d'une phase du moteur asynchrone, en supposant que toutes les phases sont équilibrées, ce qui est le cas du moteur asynchrone triphasé en service normal, aussi longtemps qu'un bobinage de phase n'est pas coupé, auquel cas le moteur électrique peut être considéré comme défaillant ou à tout le moins sérieusement dégradé. La valeur du cos ϕ (ou du déphasage ϕ) du moteur est ici déterminée par prélèvement sur le bobinage d'une phase de l'intensité qui parcourt cette phase (dans le cas où le bobinage de phase est divisé en plusieurs circuits parallèles égaux, il suffit de prélever l'intensité sur un seul de ces circuits). La valeur de l'intensité alternative monophasée Ip prélevée sur une phase est adressée à un circuit de mesure et de traitement d'intensité 5 tandis que la tension Uₚ aux bornes du bobinage de la même phase est adressée à un circuit de mesure et de traitement de tension 6.

Les circuits 5 et 6 sont reliés à un circuit 7 de mesure et de traitement de cos ϕ (ou si cela se révèle plus aisé par voie électronique, de traitement du déphasage ϕ) qui est relié à un amplificateur d'erreur 8 qui reçoit sur une borne inverseuse un signal 9 de valeur de référence ou de seuil de cos ϕ. Lorsque le signal de cos ϕ 10 délivré par le circuit 7 est inférieure au signal de seuil 9 de la valeur de référence de cos ϕ, l'amplificateur d'erreur ou amplificateur opérationnel 8 délivre un signal 8a de coupure de l'alimentation triphasée du moteur M, agissant par exemple par l'intermédiaire d'une bobine de coupure 11 sur une palette de contact 12.

Afin d'assurer le fonctionnement correct du groupe motopompe ou motoventilateur M, P, le démarrage électrique du moteur asynchrone M de ce groupe est assuré par exemple par un bouton de démarrage 13 qui excite un circuit temporisé 14 de maintien d'alimentation, lequel circuit 14 excite par exemple un bobinage 15 d'inhibition de la bobine 11 de coupure d'alimentation.

Le fonctionnement du dispositif de régulation (ou de contrôle et de surveillance) représenté à la figure 1 est simple. Au démarrage du groupe motopompe ou motoventilateur, par action sur le bouton de démarrage 13 ou sur un contacteur équivalent, le moteur M est mis sous tension et est maintenu alimenté pendant une période initiale largement suffisante pour le démarrage du moteur avec le rotor de pompe ou de ventilateur qui lui est accouplé. Pendant la phase de démarrage, le cos ϕ mesuré (ramené au cos ϕ d'une phase) est inférieur au cos ϕ minimal ou de seuil mais le circuit de temporisation 14 provoque l'inhibition de la bobine de coupure 11. Lorsque la temporisation du circuit 14 est expirée, le moteur asynchrone triphasé M qui est chargé par la machine à fluide, tourne avec un glissement g sensible (de 0,1 à 0,02 par exemple) par rapport à la vitesse de synchronisme et atteint alors un cos ϕ qui est certes inférieur au cos ϕ à la puissance nominale mais qui est néanmoins supérieur au cos ϕ limite (de 0,5 par exemple pour un moteur fractionnaire, c'est-à-dire de puissance inférieure au kilowatt).

Si au cours du fonctionnement du groupe motopompe ou motoventilateur M,P, il se produit un incident de circuit inadmissible à brève échéance ou à terme tel que:
- coupure de l'aspiration de la pompe ou du ventilateur, ce qui conduit à la dégradation très rapide des paliers de pompe par marche à sec;
- coupure du circuit de refoulement de la pompe ou du ventilateur, ce qui conduit en général au chauffage du circuit de pompe ou de ventilateur et à terme à la dégradation des paliers;
cet incident de circuit se traduit immédiatement par une diminution importante de la charge du moteur M et, par voie de conséquence, du cos ϕ du moteur électrique d'entraînement dont le glissement rotorique g devient très faible. Le cos ϕ de fonctionnement du moteur à faible charge s'approche alors de celui de la marche à vide et dépasse la valeur de seuil. Le circuit 7 de mesure et de traitement du cos ϕ délivre alors un signal 10 de cos ϕ inférieur au signal 9 de seuil de cos ϕ et l'amplificateur 8 délivre le signal de coupure de l'alimentation du moteur triphasé M qui s'arrête en indication d'incident.

Si le moteur M est un moteur asynchrone monophasé sans phase auxiliaire sortie à l'extérieur, où le champ tournant du stator est produit par exemple à l'aide d'une spire de déphasage, la variation de la valeur du cos ϕ entre la marche à vide du moteur et la marche en charge du moteur est peu significative et la surveillance de la marche du moteur à partir de la mesure du cos ϕ n'est pratiquement pas possible. Par contre, dans le cas d'un moteur asynchrone monophasé à phase auxiliaire par condensateur, tels que les moteurs électriques utilisés pour l'entraînement des pompes de faible puissance, du type des pompes de circulateur de chauffage central, la mesure du cos ϕ de la seule phase principale du moteur asynchrone monophasé indique des variations significatives de la valeur du cos ϕ, entre la marche à vide du moteur électrique et sa marche en charge. En remplaçant la mesure du cos ϕ d'une seule phase du moteur triphasé par la mesure du cos ϕ (ou du déphasage ϕ) de la phase principale du moteur asynchrone monophasé, il est possible de réaliser un dispositif de contrôle et de surveillance de la marche du moteur asynchrone monophasé qui soit similaire du dispositif représenté à la figure 1 et qui fonctionne de la même façon, le courant monophasé à deux fils du réseau domestique à 220 V remplaçant le secteur triphasé 220/380 V du réseau sur le circuit de l'interrupteur 4 représenté schématiquement à la figure 1.

On a représenté sur la figure 2 un autre dispositif de régulation de l'alimentation pour un moteur électrique monophasé M' accouplé à une pompe de circulation P. Selon ce deuxième dispositif de régulation, on se propose d'asservir la tension d'alimentation du moteur électrique monophasé à la valeur du déphasage ϕ ou du cos ϕ du courant électrique monophasé parcourant la phase principale de ce moteur asynchrone monophasé par rapport à la tension alternative monophasée aux bornes des bobinages de phase principale 16 et auxiliaire 17 de ce moteur M'. Ce moteur monophasé comporte, de façon classique pour les pompes de circulation, un rotor à cage d'écureuil accouplé mécaniquement au rotor de la pompe P. Le champ tournant du moteur monophasé est provoqué grâce à l'insertion d'un bobinage de phase auxiliaire 17 à condensateur de déphasage 18. Du fait de la présence du condensateur qui provoque un fort déphasage capacitif, les variations de la valeur du cos ϕ de la phase auxiliaire en fonction de la charge du moteur sont faibles et ne peuvent être exploitées.

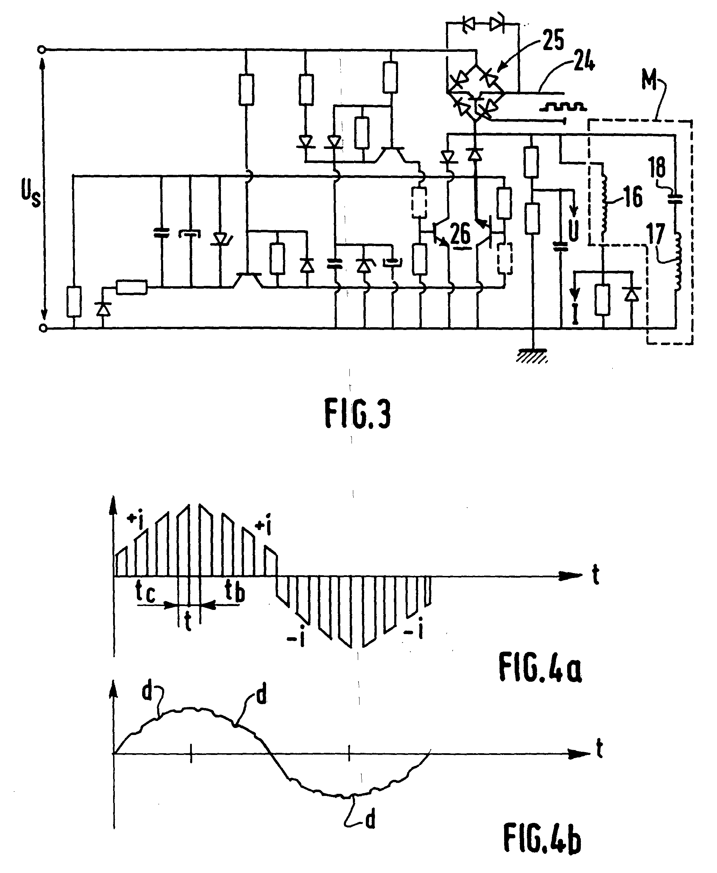

Pour effectuer le contrôle du fonctionnement du moteur M', on interpose entre le réseau du secteur d'alimentation monophasé 18 et les deux bornes d'entrée monophasées du moteur M' (tension monophasée U_{M}) un moyen de régulation de l'alimentation du moteur M'. Ce moyen de régulation comporte, d'une part, un circuit de mesure 19 du courant alternatif Iₚₚ qui parcourt la phase principale 16 du moteur M', ce circuit de mesure pouvant être disposé en série mais étant de préférence monté en dérivation lorsque des intensités importantes parcourent la phase principale 16 et, d'autre part, un circuit de mesure 20 de la tension alternative Uₚₚ aux bornes de la phase principale 16. Le dispositif de régulation comporte des circuits de comparaison similaires à ceux représentés sur la figure 1 et des circuits d'asservissement qui sont figurés schématiquement en partie sur la figure 3.

Le circuit 7 de mesure et de traitement du cos ϕ délivre une valeur de cos ϕ 10 à un amplificateur opérationnel 8 dont l'entrée inverse reçoit une valeur de consigne de cos ϕ 21. L'amplificateur opérationnel 8 délivre un signal 22 d'asservissement de tension à un circuit de régulation de tension monophasée 23 interposé entre le secteur monophasé 18 (tension U_{S} sur la figure 3) et les deux bornes d'entrée du moteur monophasé M'.

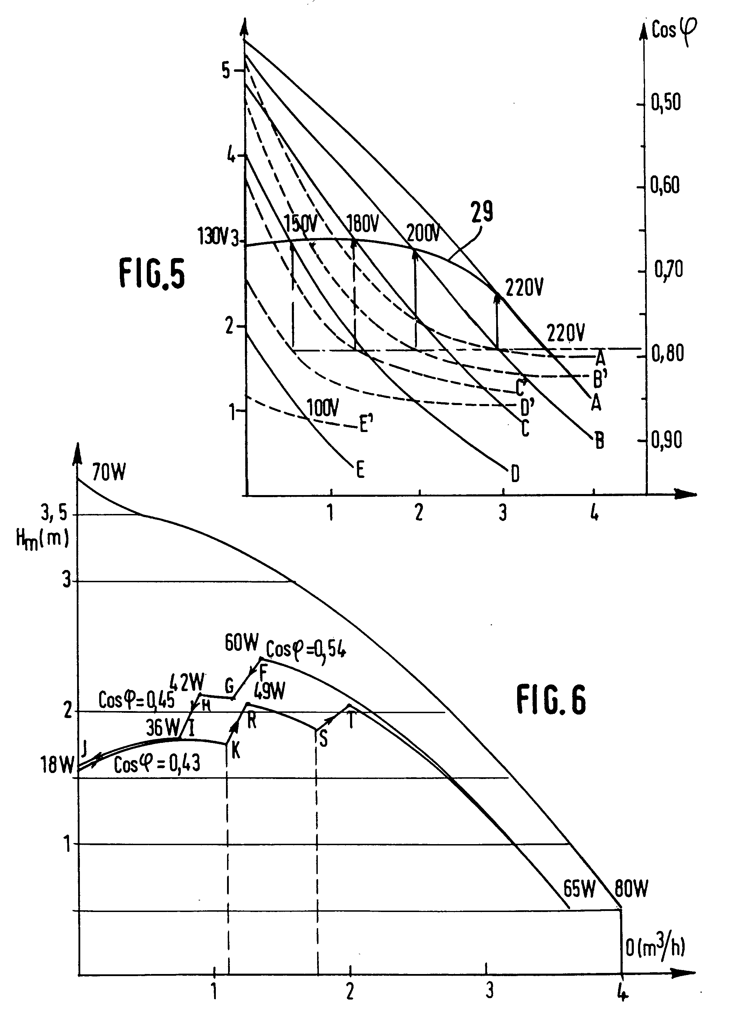

Le circuit de régulation 23 agit par l'intermédiaire d'une fréquence de hachage ou de découpage (ici à 15 kHz) 24 sur des semi-conducteurs (thyristors ou transistors) de hachage 25 couplés en opposition ou en pont, pour provoquer le hachage à haute fréquence de la sinusoïde d'intensité. On a représenté schématiquement ce hachage à la figure 4a sur une alternance et avec une fréquence de hachage de l'ordre de 800 Hz agissant sur des alternances du réseau à 50 Hz, alors que les fréquences de hachage utilisées actuellement sont de l'ordre de 15 kHz et assurent une bien meilleure conservation des formes de la sinusoïde d'intensité. Les brèves impulsions d'intensité +i, -i qui traversent le conducteur d'alimentation depuis le réseau, dans un sens ou dans l'autre selon le sens du courant alternatif, dessinent assez fidèlement, à la fréquence de 15 kHz et en reportant les intensités instantanées, la forme d'une sinusoïde. Ces impulsions d'intensité se distribuent, au-delà des semi-conducteurs de hachage 25, sur le bobinage de phase principale 16 du moteur M' et sur le bobinage de phase auxiliaire 17 qui sont refermés sur eux-mêmes par un circuit de roue libre 26 à semi-conducteurs (sur le schéma de la figure 3, on utilise des diodes combinées à des transistors) lorsque les semi-conducteurs de hachage 25 sont bloqués (non conducteurs).

On a représenté sur la figure 4b une alternance de l'intensité qui parcourt alors le bobinage de phase principale 16. On voit que pendant les instants t_{b} où les semi-conducteurs de hachage 25 sont bloqués, le circuit de phase principale 16 à coefficient de self-induction élevée se décharge sur lui-même avec une intensité décroissante qui correspond à une tension instantanée également décroissante. Ces phases de décharge ou de roue libre apparaissent sur la sinusoïde d'intensité d'une alternance sous la forme d'un petit décrochement d'intensité d suivant la forme de la courbe de décharge locale et non plus celle de la sinusoïde, l'amplitude de ces décrochements d étant de toute façon amortie par la self-induction du bobinage 16 de phase principale.

Le circuit de régulation de tension 23 est en général agencé pour fonctionner à une fréquence de hachage fixe (la fréquence de hachage qui s'est révélée la plus avantageuse dans l'état actuel des circuits électriques de pilotage est de l'ordre de 15 kHz) mais il comporte des moyens de pilotage de la durée de conduction t_{c} au cours d'une phase de hachage de durée t, de manière à régler le rapport entre la durée de conduction t_{c} et la durée de blocage (non conduction) t_{b} et à faire varier, de manière continue, l'intensité d'alimentation des bobinages 16 et 17 de phase principale et de phase auxiliaire, tout en conservant une forme sinusoïdale à cette intensité. La régulation d'intensité par hachage réalisée par le circuit de régulation 23 comprenant des semi-conducteurs de hachage 25, produit aux bornes des bobinages 16 et 17 de phase principale et de phase auxiliaire, le même effet qu'une régulation de la tension d'alimentation de ces bobinages par un transformateur à rapport de transformation variable en continu ou en quasi-continu (transformateur comportant un grand nombre de prises intermédiaires).

Comme on l'a expliqué précédemment, la valeur du cos ϕ de la phase principale 16 du moteur asynchrone monophasé entraînant la pompe P de circulateur de chauffage peut être asservie pour être supérieure à une valeur minimale telle que la vitesse de rotation de la pompe décroisse lorsque les divers circuits (radiateurs) de débit de la pompe se ferment, de telle manière que la vitesse de circulation à travers les circuits restés ouverts ne s'accroisse pas et même, le cas échéant, diminue.

La durée des phases de conduction t_{c} (à la fréquence de hachage) est pilotée par la valeur du cos ϕ de la phase principale 16 de telle façon que cette durée diminue aussi longtemps que le cos ϕ de cette phase principale est inférieur à une valeur prédéterminée et qu'elle augmente lorsque le cos ϕ est supérieur à cette valeur prédéterminée. Afin d'éviter que, lorsque des valeurs élevées du cos ϕ sont requises, la tension aux bornes du moteur M' ne tombe à des valeurs nulles (dans le cas où il est impossible d'obtenir le cos ϕ requis) ou très faibles, incapables d'assurer le maintien en rotation stable en longue durée du moteur M', est prévue sur le circuit de commande une butée (non représentée) de la largeur des impulsions passante t_{c} (voir la figure 4a) afin que la tension d'alimentation du moteur monophasé M' ne puisse pas descendre en-dessous d'une valeur limite inférieure assurant le maintien en rotation sûr du moteur après son démarrage.

Comme dans le dispositif de régulation de la tension d'alimentation de la figure 1, un organe de temporisation 27 est prévu pour inhiber ou interdire l'action du circuit de régulation, pendant une courte période de l'ordre de quelques secondes pour les circulateurs de chauffage central, après la phase initiale de mise sous tension par un bouton de démarrage 28, de manière à permettre un démarrage franc du moteur. En effet, le démarrage du moteur M' sous la pleine tension se révèle indispensable, non seulement pour les pompes qui peuvent être soumises à un gommage ou à un collage de l'arbre du rotor après une longue période de repos, mais bien plus encore pour des organes tels que les compresseurs qui peuvent supporter le couple maximal de freinage ou de retenue au cours de leur démarrage même.

On va maintenant expliquer le fonctionnement du dispositif de régulation de l'alimentation du moteur électrique monophasé M', appliqué à un groupe motopompe de circulateur de chauffage central, en utilisant les diagrammes des figures 5 et 6. Le dispositif de régulation permet également la mise en oeuvre du procédé de régulation selon l'invention.

On a indiqué sur la figure 5 la courbe de régulation pression-débit 29 obtenue avec un dispositif de régulation selon l'invention du type représenté schématiquement sur la figure 2, c'est-à-dire un dispositif où la tension d'alimentation des deux phases du moteur asynchrone monophasé (phase auxiliaire à condensateur et phase principale) est régulée en fonction du cos ϕ de la phase principale. On est ici asservi à un cos ϕ d'au moins 0,79, c'est-à-dire que la durée t_{c} des impulsions passantes à 15 kHz (voir la figure 4a) diminue dès que le cos ϕ instantané de la phase principale est inférieur à 0,79 et augmente lorsqu'il est supérieur à cette valeur de 0,79.

Pour expliquer la courbe de régulation 29 obtenue, on a représenté sur la figure 5, respectivement, en traits pleins les courbes pression-débit relevées en eau de chauffage froide lorsque le moteur électrique du groupe motopompe est alimenté en courant alternatif monophasé à 50 périodes sous des tensions respectives A, B, C, D, E de 220, 200, 180, 150 et 100 V et, en tirets, les courbes de cos ϕ correspondantes A', B', C', D', E' obtenues. On voit sur la figure 5 que la régulation par réduction de la durée t_{c} des impulsions passantes commence pour un débit inférieur à 3 m3/h et une pression de refoulement inférieure à 2,4 m de colonne d'eau. Lorsque les débits ont très fortement diminués à 0,5 m3/h, ce qui correspond par exemple à la fermeture de la plus grande partie des radiateurs d'une installation de chauffage, la pression de refoulement qui atteindrait alors près de 5 m de colonne d'eau, est réduite à 3 m de colonne d'eau car la tension d'alimentation du moteur est réduite à 150 V, le cos ϕ de la phase principale atteignant encore 0,79. Si le débit de refoulement de la pompe continue à se réduire, jusqu'à devenir nul, la tension d'alimentation du moteur se réduit jusqu'à une valeur de butée à 130 V, ce qui correspond à une consommation de 40 W pour la pompe tournant sans débit.

Des essais ont montré que la limite d'accrochage (de maintien en rotation) du moteur de la pompe correspondait à une puissance consommée de 15 W pour une tension d'alimentation de 80 V aux bornes de la pompe et que, même en eau chaude, on pouvait limiter la consommation de la pompe à 18 W sous 90 V sans risque de décrochage de la rotation du moteur. L'exploitation dans cette zone de marche à vide nécessite cependant l'utilisation d'un système de régulation plus complexe.

La courbe de régulation plus sophistiquée représentée à la figure 6 permet l'exploitation d'un groupe motopompe dans des conditions optimisées, c'est-à-dire de moindre bruit et de moindre consommation, en particulier pour les faibles débits de la pompe. La courbe pression-débit figurant sur la droite de la figure 6 correspond au fonctionnement du moteur sous la pleine tension du réseau, c'est-à-dire à la tension nominale de 220 V, 50 Hz, pour les réseaux du secteur domestique en Europe. La marche sans débit de la pompe (à une vitesse de rotation maximale) engendre une pression de refoulement statique d'environ 3,8 m de colonne d'eau pour une consommation de 70 W, tandis que le débit maximal de refoulement de la pompe (en principe à une vitesse de rotation légèrement plus faible, du fait de la charge de couple), atteint 4 m3/h pour une consommation de 80 W.

La régulation qui est proposée pour cette pompe fixe, à l'aide d'un circuit de commande préétabli ou d'un microprocesseur ad hoc, trois valeurs de régulation du cos ϕ ou de l'angle de phase ϕ après la temporisation de la phase de démarrage. Tout d'abord, le circuit hacheur d'intensité est utilisé en fonctionnement permanent pour limiter la tension d'alimentation du moteur à environ 200 V, ce qui réduit sa consommation dans la zone de débit maximum (limité alors à environ 3,5 m3/h) à 65 W. Pour des débits décroissants, la charge du moteur diminue, ce qui provoque une diminution de la valeur du cos ϕ de la phase principale jusqu'à une première valeur de seuil de cos ϕ = 0,54 correspondant au point F sur la figure 6 où la tension est tombée à 160 V.

Ce passage au point F déclenche, par l'intermédiaire d'un programme précablé ou bien mis en mémoire dans un microprocesseur de régulation, une réduction brutale de la tension d'alimentation par réduction de la durée t_{c} des phases de conduction, suivie d'une régulation à une valeur de cos ϕ = 0,45. La tension descend alors à 140 V au point G où l'on observe simultanément:
- la réduction à 49 W de la puissance consommée par le moteur et ses circuits de régulation,
- une diminution de la vitesse de rotation du rotor de pompe avec l'augmentation du glissement g par rapport à la vitesse de synchronisme,
- une diminution correspondante de la hauteur de refoulement (limitée à environ 2,1 m de colonne d'eau) et du débit de refoulement (réduit à environ 1,1 m3/h).

La régulation à cos ϕ = 0,45 après le point G se poursuit jusqu'au point H ou la tension d'alimentation est tombée à 120 V et la consommation totale du moteur s'établit à 42 W. Le passage par la tension de 120 V déclenche alors une chute de la tension à 110 V et la régulation à cos ϕ = 0,43 pour la phase principale avec une chute au point I où la consommation tombe à 36 W. La régulation à cos ϕ = 0,43 se poursuit alors entre les points I et J de la figure 6 par diminution de la durée des phases de conduction t_{c} jusqu'à atteindre en I une tension d'alimentation de 80 V seulement et une consommation de puissance totale du moteur limitée à 18 W pour le point sans débit J où:
- la vitesse de rotation du moteur qui devrait normalement augmenter par suite de la diminution du débit, diminue du fait de l'augmentation du glissement g du rotor par rapport à la vitesse de synchronisme; la hauteur de refoulement statique n'est plus alors que de 1,6 m de colonne d'eau et la marche à vide de la pompe à vitesse réduite est plus silencieuse,
- la consommation de puissance est réduite à 18 W, soit presque le 1/4 de la consommation de 70 W sans débit de refoulement, sous la pleine tension de 220 V. L'échauffement du bloc motopompe en marche sans débit en est réduit d'autant, tandis que la longévité de la pompe est accrue.

La régulation de la phase de reprise du débit de la pompe marque une certaine hystérésis par rapport à la régulation en débits décroissants, ce qui présente l'avantage d'éviter les battements de régulation.

La régulation à cos ϕ = 0,43 repasse bien entendu par la courbe J, I et se poursuit sous des tensions supérieures à 100 V jusqu'au point K où la tension d'alimentation est remontée jusqu'à 115 V et a déclenché, par l'intermédiaire du circuit de contrôle précablé ou mis en mémoire dans un microprocesseur, un passage à la régulation à cos ϕ = 0,45 avec une tension initiale de 130 V. Le point de fonctionnement passe en R dans le prolongement de la courbe précédente de régulation à cos ϕ = 0,45, avec une tension de 145 V. Le fonctionnement se poursuit alors à des tensions croissantes jusqu'au point S où la pression de refoulement est d'environ 1,8 m de colonne d'eau pour un débit de refoulement d'environ 1,8 m3/h. Au point S, la tension d'alimentation du moteur atteint 170 V, ce qui est estimé incompatible avec la valeur cos ϕ = 0,45 par le circuit de régulation qui déclenche la remontée à la tension régulée à 200 V au point T avec asservissement à cos ϕ = 0,54. Les points de fonctionnement du groupe motopompe viennent alors se placer sur la courbe à grand débit correspondant à l'alimentation des deux phases du moteur (principale et auxiliaire) sous la tension réduite à 200 V par hachage à une fréquence de 15 à 20 kHz qui conserve la forme de la sinusoïde à 50 Hz dans des limites permettant une mesure fiable et fidèle du cos ϕ (ou de l'angle de déphasage ϕ, le cas échéant).

On notera que la commande du circuit de régulation, dont le fonctionnement est explicité par la figure 6, peut être munie d'un bouton de commande de marche à pleine puissance sans régulation automatique, permettant par exemple de donner un à-coup de circulation servant à chasser les bulles d'air stagnant sur une partie du circuit, après fermeture des autres parties du circuit.

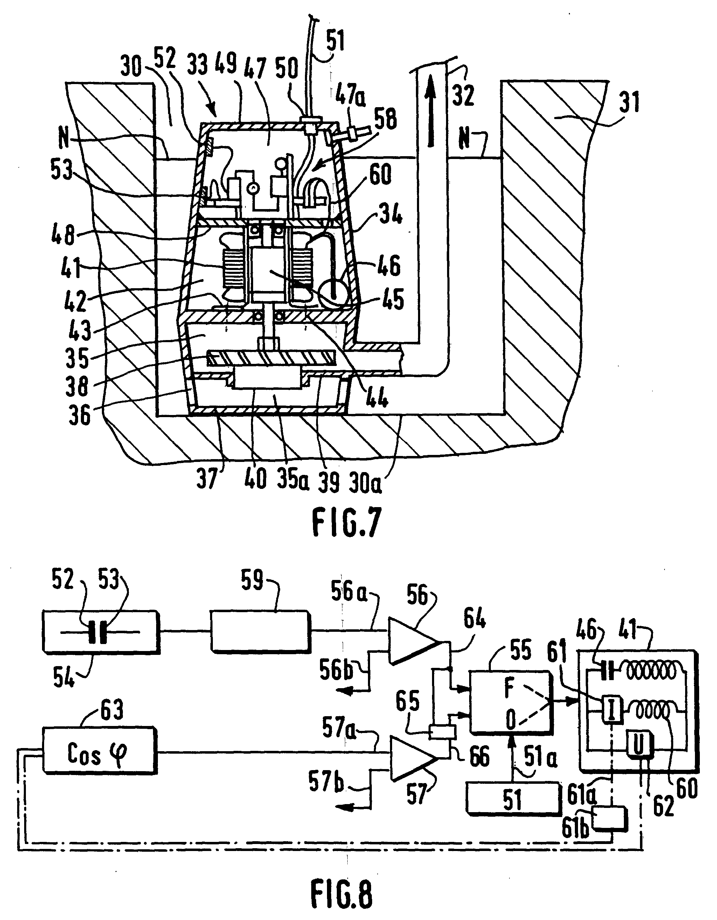

Le groupe de pompe d'exhaure représenté sur les figures 7 et 8 est en principe destiné à être installé dans un puits de captage 30 à vider périodiquement de l'eau qu'il contient. Un tel puits 30 est par exemple aménagé sur le sol d'une cave d'immeuble où se produisent des infiltrations d'eau qui sont à rejeter à l'égout par une conduite de refoulement 32. La pompe d'exhaure amovible 33 est par exemple incluse dans un corps en matière plastique 34 qui forme une chambre de rotor de pompe 35 avec une couronne d'orifices de collecte 36 disposés juste au-dessus d'un socle de pompe posé sur le fond 30a du puits 30.

Le rotor ou rouet de pompe 38 coopère avec un passage d'aspiration ménagé dans une cloison 39 de la chambre 35 pour définir un orifice d'aspiration 40 débouchant dans la chambre de rotor inférieure 35a. Le rotor de pompe 38 est relié à un moteur électrique d'entraînement 41 disposé de façon étanche dans une chambre de moteur 42. L'étanchéité de la chambre de moteur 42 est par exemple assurée du fait que le moteur 41 comporte un tube d'entrefer fixé de façon étanche par un flasque frontal 43 sur une cloison transversale 44 du corps de pompe. La cloison 44 peut être traversée de façon non étanche par l'arbre du rotor de pompe sans qu'il risque de se produire des fuites dans la chambre de moteur 42 car le rotor 45 du moteur 41 est totalement encapsulé dans le tube d'entrefer du moteur.

On utilise ici un moteur électrique asynchrone monophasé à phase auxiliaire à condensateur 46 et l'on se propose de réguler et contrôler la marche du moteur par un système de régulation analogue à celui représenté schématiquement sur la figure 1 pour un moteur triphasé. On dispose pour cela d'un équipement électrique et électronique de contrôle et de commande logé de façon étanche dans une chambre de commande 47 ménagée à la partie supérieure du corps de pompe 34 et séparée du stator de moteur par une cloison 48 qui n'a pas besoin d'être étanche si la chambre de moteur 42 est isolée de l'extérieur par un couvercle étanche 49, après mise en place des équipements.

On notera que la paroi du corps 34 peut être traversée par un raccord 47a de gonflage des chambres 42, 47 permettant de mettre ces chambres sous une pression d'air ou de gaz neutre sec interdisant mieux la pénétration éventuelle de l'eau ou de l'humidité dans ces chambres de moteur et d'équipement et facilitant le refroidissement des organes électriques ou électroniques susceptibles de chauffer. Une traversée étanche 50 doit également être prévue, dans le couvercle 49 ou le corps 34, pour le fil d'alimentation 51a de la pompe, à relier ici au secteur monophasé 51. On notera que le fil d'alimentation 51a peut être renforcé et placé au centre du couvercle 49 pour servir de moyen de manipulation et de suspension du groupe motopompe 33 susceptible, dans certains cas, d'être descendu au fond d'un puits profond. Le système de régulation de la pompe comporte deux électrodes 52, 53 au contact de la paroi intérieure en matériau isolant (matière plastique) de la chambre étanche 47. Ces électrodes forment ainsi un détecteur capacitif de niveau 54 qui détecte la présence de l'eau dans le puits 30 au moins jusqu'au niveau de l'électrode supérieure 52.

Les deux fils 51a du secteur monophasé 51 sont reliés avant le moteur 41 à un interrupteur-contacteur principal 55 dont la fermeture F' et respectivement l'ouverture O sont contrôlées par un amplificateur opérationnel correspondant 56 ou respectivement 57. La figure 8 représente schématiquement le circuit et les équipements de régulation et de surveillance 58 qui sont disposés dans la chambre de commande 47 et qui comportent, en plus des amplificateurs 56 et 57 et de l'interrupteur 55:
- un organe 59 de traitement des indications du détecteur de niveau 54, cet organe 59 fournissant un signal de niveau à une entrée 56a de l'amplificateur 56 dont l'entrée inverse 56b reçoit un signal de consigne de niveau;
- le circuit de phase principale 60 du moteur 41 est équipé d'un capteur d'intensité monophasé de phase principale et d'un capteur 62 de tension de phase principale;
- les signaux des capteurs 61 et 62 sont adressés à un circuit 63 de traitement et de mesure de cos ϕ (ou de phase ϕ) dont le signal de sortie est adressé à l'une des entrées 57a de l'amplificateur 57 dont l'entrée inverse reçoit un signal de consigne de cos ϕ (ou de ϕ). Le circuit d'intensité 61a peut, le cas échéant, traverser un organe de limitation ou disjoncteur 61b assurant une fonction de surveillance électronique de la puissance appelée et des courts-circuits éventuels;
- le signal de sortie 64 de l'amplificateur 56 est adressé à l'interrupteur 55 pour déclencher la fermeture de cet interrupteur et donc l'alimentation du moteur monophasé 41 lorsque les électrodes 52, 53 ont détecté le remplissage du puits 30. Le signal 64 est par ailleurs adressé également à un circuit de temporisation 65 pour l'activer afin de retarder la transmission du signal de sortie 66 de l'amplificateur 57;
- lorsqu'il est transmis à l'interrupteur 55, le signal de sortie 66 de l'amplificateur opérationnel 57 provoque l'ouverture de cet interrupteur 55 et donc la coupure de l'alimentation électrique du moteur 41.

Le fonctionnement du groupe motopompe d'exhaure représenté sur les figures 7 et 8 va maintenant être explicité. Le groupe motopompe est disposé dans le puits de collecte 30 dans la position représentée sur la figure 7 en étant relié au secteur électrique 220 V monophasé. Lorsque le niveau N de l'eau qui s'écoule dans le puits 30 de collecte des eaux présentes ou infiltrées sur le sol, atteint le voisinage de l'électrode la plus élevée 52, il se produit entre les électrodes 52 et 53 un bouclage capacitif qui déclenche, par le circuit de traitement 59, l'émission d'un signal 56a qui excite l'amplificateur opérationnel 56 et provoque l'émission d'un signal 64 déclenchant la fermeture de l'interrupteur 55. Le moteur électrique 41, alors alimenté sous la tension du réseau monophasé, démarre en indiquant, pendant sa phase de démarrage, une valeur de cos ϕ mesurée par le circuit 63 et qui est inférieure à la valeur de seuil 57b. La transmission du signal de sortie 66 de l'amplificateur 57 est arrêtée par le circuit de temporisation 65 alors excité par le signal de démarrage 64 et la montée en vitesse du moteur 41 et du rotor de pompe 38 se poursuit jusqu'à une vitesse de rotation pour laquelle le cos ϕ mesuré par le circuit 63 devient supérieur à la valeur de seuil 57b.

Le refoulement du liquide collecté dans le puits 30 se poursuit par la conduite de refoulement 32 jusqu'à ce que le niveau N du liquide à l'intérieur du puits 30 atteigne l'entrée des orifices de collecte 36. Il se produit alors une entrée d'air croissante à l'orifice d'aspiration 40 du rotor de pompe 38, ce qui conduit la pompe à refouler une émulsion de liquide et d'air de densité décroissante. Du fait de la diminution de la densité effective du liquide refoulé par la pompe, la charge de la pompe diminue tandis que la vitesse de son rotor augmente, en se rapprochant de la vitesse de synchronisme et le cos ϕ de la phase principale (bobinage 60) du moteur 41, tel que mesuré par le circuit 63, diminue jusqu'à devenir inférieur à la valeur de seuil 57b. Le signal 66 délivré par l'amplificateur 57 est alors immédiatement adressé à l'interrupteur 55 car la temporisation du circuit 65 est expirée depuis longtemps et l'interrupteur 55 s'ouvre en coupant l'alimentation du moteur 41 qui continue à tourner jusqu'au désamorçage de la pompe et à l'arrêt du rotor de pompe 38. Lorsque le niveau du liquide N qui a remonté atteint à nouveau l'électrode 52, un nouveau cycle d'exhaure reprend comme décrit ci-dessus.

La protection assurée par le dispositif de régulation et de surveillance représenté sur les figures 7 et 8 est efficace et continue. En effet, en supposant que l'on simule accidentellement (par exemple par jet à l'égout d'une petite quantité d'eau qui tombe sur les électrodes 52, 53) le niveau N haut dans le puits 30, l'amplificateur 56 déclenche la fermeture de l'interrupteur 55 et le moteur 41 démarre à sec sans charge de liquide. Le rotor de pompe 38 tournant sans charge dans l'eau, le cos ϕ de la phase principale du moteur est inférieur à la valeur de seuil 57b et l'amplificateur 57 adresse un signal 66. Le signal arrêté momentanément par le circuit de temporisation 65 atteint l'interrupteur 55 dès la fin de la temporisation (quelques secondes) et fait ouvrir l'interrupteur 55 qui coupe l'alimentation du moteur 41 qui s'arrête bien avant que la marche à sec n'ait risqué de dégrader ses paliers. On notera bien entendu que le moteur asynchrone monophasé 41 peut être remplacé dans certaines applications plus puissantes par un moteur asynchrone triphasé, la régulation intervenant alors de façon similaire à celle du schéma de la figure 1, c'est-à-dire en référence à une seule phase quelconque du moteur triphasé supposé équilibré. Dans certaines applications, le moteur 41 pourrait même être un moteur à collecteur et à courant alternatif monophasé (moteur universel) direct ou redressé (moteur à courant ondulé) pour lequel le cos ϕ ou l'angle de déphasage ϕ, correspondant à la marche à vide ou dénoyée de la pompe, est bien identifiable et constitue une valeur de seuil apte à déclencher la coupure de l'alimentation électrique du moteur. On pourrait également utiliser la détection de l'angle de déphasage correspondant à la marche à vide ou dénoyée pour des pompes entraînées par un moteur synchrone à courant alternatif, monophasé ou polyphasé, s'il s'avérait expérimentalement que la valeur du déphasage ϕ correspondant à la marche à vide ou dénoyée de la pompe était stable et bien identifiable, ce qui ne paraît possible que pour des moteurs synchrones à excitation stable, par exemple à aimants permanents et peut être pour les moteurs synchrones de nouvelle génération avec un champ tournant à fréquence variable depuis la fréquence nulle (pour le démarrage) jusqu'à un maximum admissible, à condition que l'excitation du rotor ne soit pas soumise à un réglage, sauf pour les moteurs à fréquence réglable et à excitation asservie à la vitesse de rotation, pour donner au moteur une caractéristique de moteur série (à l'exemple des moteurs synchrones de traction du TGV).

Dans ce dernier cas, comme pour le moteur universel à courant monophasé, la marche dénoyée de la pompe qui correspond à un emballement du moteur, serait détectée par la comparaison de la valeur instantanée du déphasage du courant alternatif d'alimentation d'une phase du moteur avec la valeur de seuil correspondant à la marche dénoyée de la pompe, la mesure du déphasage pouvant cependant s'appliquer au courant alternatif d'alimentation à l'amont du bloc de transformation de courant (redresseur pour l'alimentation en courant ondulé ou bien redresseur et onduleur pour l'alimentation triphasée à fréquence variable d'un moteur synchrone ou d'un moteur asynchrone).

La régulation de la tension d'alimentation aux bornes des deux phases (phase principale, phase auxiliaire) du moteur asynchrone monophasé pour les modes de réalisation décrits précédemment présente l'avantage de soumettre le condensateur 4 de phase auxiliaire à des tensions aux bornes plus faibles et de diminuer ainsi les risques de claquage de ce condensateur. Une telle régulation diminue l'intensité traversant à vide le bobinage de phase auxiliaire 17 et, par voie de conséquence, diminue au maximum la puissance électrique consommée par le moteur asynchrone monophasé.

La régulation de la seule tension de la phase principale alors que la phase auxiliaire reste en permanence sous la pleine tension peut également être utilisée car elle présente l'avantage d'un meilleur cos ϕ global de l'installation, le condensateur de la phase auxiliaire permanente étant mieux utilisé. Les inconvénients de cette dernière solution résident dans une tension plus élevée aux bornes du condensateur 18 ou 46, un échauffement plus important à vide du bobinage auxiliaire et une plus grande consommation du moteur en marche à vide ou à faible charge. On notera que la surtension aux bornes du condensateur de phase auxiliaire 18 ou 46 (pour une alimentation en 220 V, la tension aux bornes de ce condensateur est couramment de 360 V en marche à vide), est fonction de la self-induction du bobinage de phase auxiliaire et correspond rarement à une augmentation du risque de claquage de l'isolation du condensateur.

Afin d'obtenir, pour une pompe entraînée par un moteur asynchrone monophasé dont la tension est régulée selon l'invention, une courbe pression-débit très progressive à partir de la valeur maximum de pression déterminée par la régulation sur le cos ϕ de la phase principale du moteur asynchrone monophasé (à partir du point F sur les courbes de régulation de la figure 6), il est possible de substituer, à partir de ce point de pression maximum régulée, au réglage par une valeur du cos ϕ ou à un cos ϕ supérieur à une valeur de seuil, un réglage de la tension d'alimentation en fonction du cos ϕ de cette phase principale qui soit déterminé en continu par les indications d'une carte à mémoire fixe ou ROM.

On réalise ainsi sur la partie descendante des courbes de régulation (parcours F, G, H, I, J), une régulation de tension très progressive jusqu'au point J de pression sans débit. La tension minimale ou de butée peut également être déterminée par la carte à mémoire incluse dans le circuit de régulation de l'alimentation du moteur asynchrone monophasé.

La carte à mémoire ou le circuit de régulation de la tension de la phase principale ou des deux phases (principale et auxiliaire) du moteur peut également comporter un organe de limitation (par exemple un circuit de pilotage de l'organe de limitation 61b représenté à la figure 8) de l'intensité traversant la phase principale de ce moteur, ou le cas échéant, de l'intensité alternative totale traversant le moteur, de manière à constituer un organe de protection contre les courts-circuits du moteur, ainsi qu'un organe de réglage de la consommation maximale du moteur.

## Revendications

1. Procédé de régulation de l'alimentation d'un moteur électrique asynchrone monophasé du type à phase principale et à phase auxiliaire permanente, dans lequel on mesure l'angle de déphasage du courant par rapport à la tension d'une seule desdites phases et on régule l'alimentation dudit moteur en fonction de la valeur de l'angle de déphasage ainsi mesuré, **caractérisé en ce que** l'on régule la tension d'alimentation du moteur à l'aide d'un circuit oscillant à découpage ou hachage de la sinusoïde avec reconstitution de la continuité de la sinusoïde d'intensité par un circuit de roue libre, la régulation contrôlant la durée des impulsions de découpage passantes, de manière à disposer d'une mesure fidèle dudit angle de déphasage du courant par rapport à la tension ainsi régulée.

2. Procédé selon la revendication 1, **caractérisé en ce que** la phase auxiliaire est une phase auxiliaire permanente à condensateur et en ce que l'on mesure l'angle de déphasage sur la phase principale dudit moteur.

3. Procédé selon la revendication 2, **caractérisé en ce que** l'on alimente en permanence la phase auxiliaire par la tension du secteur et en ce que l'on régule l'alimentation de la phase principale en fonction de la valeur de l'angle de déphasage mesuré sur la phase principale.

4. Procédé selon l'une quelconque des revendications 1 à 3, **caractérisé en ce qu**'au démarrage du moteur électrique, l'on déclenche une période de temporisation au moins égale à la durée normale de démarrage du moteur et pendant laquelle la régulation de l'alimentation dudit moteur est inhibée.

5. Procédé selon l'une quelconque des revendications 1 à 4, **caractérisé en ce que** l'on régule l'alimentation du moteur de manière à maintenir l'angle de déphasage, dans les limites des possibilités physiques du circuit, à une valeur sensiblement constante.

6. Procédé selon l'une quelconque des revendications 1 à 4, **caractérisé en ce que** l'on régule l'alimentation du moteur de manière à maintenir l'angle de déphasage, dans les limites des possibilités physiques du circuit, à une valeur supérieure à la valeur de seuil.

7. Procédé selon l'une quelconque des revendications 1 à 6, **caractérisé en ce qu**'on régule l'alimentation du moteur de manière à maintenir, dans les limites des possibilités physiques du circuit, une relation déterminée par une carte ou un circuit à mémoire ou relation cartographique entre la tension d'alimentation du moteur et ledit angle de déphasage.

8. Procédé selon l'une des revendications 1 à 3, **caractérisé en ce que** l'on régule en coupant la tension d'alimentation du moteur lorsque l'angle de déphasage mesuré dépasse une valeur de seuil correspondant sensiblement à la marche à vide dudit moteur.

9. Application du procédé selon l'une des revendications 1 à 8 au contrôle du moteur électrique d'une pompe par comparaison de l'angle de déphasage mesuré à une valeur de référence spécifique à ladite pompe.

10. Application du procédé selon l'une quelconque des revendications 1 à 8 au contrôle du moteur électrique d'entraînement d'une machine rotative à fluide telle qu'une pompe par comparaison de l'angle de déphasage mesuré à une valeur de seuil correspondant à la marche à vide ou dénoyée de la machine et coupure de l'alimentation électrique du moteur lorsque l'angle de déphasage mesuré atteint ladite valeur de seuil.

11. Application du procédé selon l'une quelconque des revendications 1 à 8 au contrôle du moteur d'entraînement monophasé d'une machine rotative à fluide telle qu'une pompe par comparaison de l'angle de déphasage mesuré avec une valeur déterminée de seuil ou de consigne correspondant à une valeur minimale régulée de l'angle de déphasage mesuré sur la phase principale dudit moteur monophasé.

12. Application du procédé selon la revendication 11, au contrôle du moteur d'entraînement monophasé d'une machine rotative à fluide telle que la valeur déterminée de seuil ou de consigne est donnée par une carte ou un circuit à mémoire en fonction de la tension d'alimentation du moteur.

13. Dispositif de régulation de l'alimentation du moteur électrique monophasé asynchrone, à phase auxiliaire permanente à condensateur, d'entraînement d'un générateur rotatif de pression et/ou de débit selon le procédé décrit dans l'une des revendications 1 à 8, **caractérisé en ce qu**'un moyen de contrôle, interposé entre le réseau du secteur monophasé et ledit moteur, comporte un organe (7) de mesure de l'angle de déphasage du courant par rapport à la tension (ou du cos ϕ) de la seule phase principale du moteur monophasé et un organe (8) de comparaison de la valeur mesurée dudit angle de déphasage avec une valeur de seuil ou de consigne déterminée, et apte à adresser, en cas de dépassement de ladite valeur de seuil ou de consigne, un signal de correction à un régulateur de tension monophasée (23) dont la sortie (U_{M}) alimente ledit moteur électrique monophasé et en ce que ledit régulateur de tension (23) comporte un circuit oscillant à découpage (24, 25), par exemple à semiconducteur piloté par des impulsions de gâchette, apte à produire des impulsions de conduction cadencées et dont la durée (t_{c}) est régulée en fonction de la valeur mesurée de l'angle de déphasage, ainsi qu'un circuit de roue libre (26) assurant la continuité de l'intensité du courant alternatif parcourant les bobinages du moteur, de manière à disposer pour la phase principale (16) d'une mesure stable et fidèle de l'angle de déphasage.

14. Dispositif selon la revendication 13, **caractérisé en ce que** la valeur de seuil ou de consigne déterminée est donnée par une carte ou un circuit à mémoire en fonction de la tension à la sortie du régulateur de tension monophasée (23).

15. Dispositif selon la revendication 13, **caractérisé en ce qu**'il est prévu plusieurs valeurs de seuil ou de consigne prédéterminées et successives du cos ϕ (ou respectivement de l'angle de déphasage ϕ) qui sont de valeurs décroissantes (ou respectivement croissantes pour l'angle ϕ) pour des valeurs de tension décroissantes à la sortie du régulateur de tension monophasée (23) et qui correspondent chacune à une plage de régulation du cos ϕ (ou de l'angle ϕ) entre des valeurs de tension admissibles minimales et maximales à la sortie (U_{M}) du régulateur de tension monophasée.

16. Procédé de contrôle de l'alimentation en courant alternatif du moteur électrique d'une pompe ou autre machine à fluide dans lequel on compare la valeur mesurée de l'angle de déphasage du courant par rapport à la tension d'au moins une phase d'alimentation électrique dudit moteur avec une valeur de référence, **caractérisé en ce que** l'on compare l'angle de déphasage mesuré avec une valeur de seuil correspondant à la marche à vide ou dénoyée de la pompe et l'on coupe l'alimentation électrique du moteur lorsque l'angle de déphasage mesuré atteint ladite valeur de seuil, après une temporisation de démarrage du moteur.

17. Dispositif de régulation de l'alimentation du moteur électrique d'un groupe motopompe de vidange automatique du liquide collecté dans une capacité, selon le procédé de la revendication 16, **caractérisé en ce qu**'un interrupteur marche-arrêt (55) est interposé entre le réseau électrique du secteur (51) et ledit moteur (41), cet interrupteur (55) étant sensible, d'une part, à un signal de démarrage émis à partir d'un détecteur (59) du niveau (N) du liquide dans la capacité (30) et, d'autre part, à un signal d'arrêt émis à partir d'un organe de comparaison (57) entre l'angle de déphasage du courant par rapport à la tension d'au moins une phase d'alimentation dudit moteur électrique et une valeur de seuil correspondant sensiblement à la marche à vide du moteur électrique, le signal de démarrage étant également adressé à un organe (65) de temporisation de la transmission du signal d'arrêt éventuel ou de maintien temporisé de l'alimentation électrique du moteur au démarrage.

18. Dispositif selon l'une des revendications 13 à 15 et 17, **caractérisé en ce qu**'un organe de temporisation (14, 27, 65) dont la durée de temporisation correspond sensiblement à au moins la durée de démarrage du moteur électrique (M, M', 41) est interposé entre la sortie de l'organe de comparaison (8, 56) et l'interrupteur (4, 55) ou le régulateur de tension (23) afin d'inhiber, pendant ladite durée de temporisation, la transmission du signal de sortie de l'organe de comparaison (8, 56) vers l'interrupteur (4, 55) ou le régulateur de tension (23).

## Patentansprüche

1. Verfahren zur Regelung der Stromversorgung eines Einphasen-Asynchronmotors mit einer Hauptphase und einer permanenten Hilfsphase, bel dem der Phasenabwelchungswinkel des Stromes in bezug auf die Spannung einer einzigen der genannten Phasen gemessen und die Stromversorgung des Motors in Abhänglgkeit von dem so gemessenen Wert des Phasenabweichungswinkels geregelt wird, **dadurch gekennzeichnet,** daß man die Versorgungsspannung des Motors mit Hilfe einer Oszillatorschaltung zum Segmentieren oder Zerhacken der Sinuskurve regelt, mit Wiederherstellung der Stetigkeit der Sinuskurve der Stromstärke durch eine Freilaufschaltung. wobei die Regelung die Dauer der durchgehenden Segmentierungsimpulse derart steuert. daß man ein treues Maß für den genannten Phasenabweichungswinkel des Stromes in bezug auf die so geregelte Spannung erhält.

2. Verfahren nach Anspruch 1. **dadurch gekennzeichnet**, daß die Hilfsphase eine permanente Kondensator-Hilfsphase ist und daß man den Phasenabweichungswinkel an der Hauptphase des Motors mißt.

3. Verfahren nach Anspruch 2. **dadurch gekennzeichnet**. daß man die Hilfsphase permanent mit der Netzspannung versorgt und daß man die Versorgung der Hauptphase in Abhängigkeit vom Wert des an der Hauptphase gernessenen Phasenabweichungswinkels regelt.

4. Verfahren nach einem der Ansprüche 1 bis 3. **dadurch gekennzeichnet**, daß man beim Anlaufen des Elektromotors eine Verzögerungsperiode startet, die wenigstens gleich der normalen Dauer des Anlaufvorgangs des Motors ist und während derer die Regelung der Stromversorgung des Motors gesperrt ist.

5. Verfahren nach einem der Ansprüche 1 bis 4. **dadurch gekennzeichnet**, daß man die Stromversorgung des Motors so regelt, daß der Phasenabweichungswinkel Innerhalb der Grenzen der physikalischen Möglichkeiten der Schaltung auf einem im wesentlichen konstanten Wert gehalten wird.

6. Verfahren nach einem der Ansprüche 1 bis 4, **dadurch gekennzeichnet**, daß man die Stromversorgung des Motors so regelt, daß der Phasenabweichungswinkel innerhalb der Grenzen der physikalischen Möglichkeiten der Schaltung auf einem Wert gehalten wird, der größer als der Schwellenwert ist.

7. Verfahren nach einem der Ansprüche 1 bis 6. **dadurch gekennzeichnet**. daß die Stromversorgung des Motors so geregelt wird, daß zwischen der Vcrsorgungsspannung des Motors und dem Phasenabweichungswinkel innerhalb der Grenzen der physikalischen Möglichkeiten der Schaltung eine Bezlehung aufrechterhalten wird, die durch eine Karte oder eine Speicherschaltung oder eine Kennlinle bestimmt ist.

8. Verfahren nach einem der Ansprüche 1 bis 3, **dadurch gekennzeichnet**, daß man regelt. Indem die Versorgungsspannungs des Motors abgeschnitten wird, wenn der gemessene Phasenabweichungswinkel einen Schwellenwert übersteigt. der im wesentlichen dem Leerlauf des Motors entspricht.

9. Anwendung des Verfahrens nach einem der Ansprüche 1 bis 8 zur Steuerung eines Elektromotors einer Pumpe durch Vergleich des gemessenen Phasenabwelchungswinkels mit einem für diese Pumpe spezifischen Bezugswert.

10. Anwendung des Verfahrens nach einem der Ansprüche 1 bis 8 zur Steuerung eines elektrischen Antriebsmotors einer Fluidmaschine mit Rotor, etwa einer Pumpe. durch Vergleich des gemessenen Phasenabweichungswinkels mit einem Schwellenwert, der dem Leerlauf oder dem freiströmenden Betrieb der Maschine entspricht. und durch Abschneiden der elektrischen Versorgung des Motors, wenn der gemessene Phasenabweichungswinkel den genannten Schwellenwert erreicht.

11. Anwendung des Verfahrens nach einem der Ansprüche 1 bis 8 zur Steuerung eines einphasigen Antriebsmotors einer Fluidmaschine mit Rotor, etwa einer Pumpe, durch Vergleich des gemessenen Phasenabweichungswinkels mit einem bestimmten Schwellenwert oder Einstellwert, der einem minimalen geregelten Wert des an der Hauptphase des einphasigen Motors gemessenen Phasenabweichungswinkels entspricht.

12. Anwendung des Verfahrens nach Anspruch 11 zur Steuerung des einphasigen Antriebsmotors einer Fluidmaschine mit Rotor derart, daß der bestimmte Schwellenwert oder Einstellwert als Funktion der Versorgungsspannung des Motors durch eine Karte oder Speicherschaltung gegeben ist.

13. Vorrichtung zur Steuerung der Stromversorgung eines einphasigen Asynchronmotors mit einer permanenten Kondensator-Hilfsphase, zum Antrieb eines rotierenden Druckerzeugers und/oder Volumenstromerzeugers, nach dem Verfahren, das in einem der Ansprüche 1 bis 8 beschrieben ist, **dadurch gekennzeichnet**, daß eine zwischen dem einphasigen Stromnetz und dern genannten Motor eingefügte Steuereinrichtung ein Organ (7) zur Messung des Phasenabweichungswinkels des Stromes in bezug auf die Spannung (oder des cos ϕ) der einzigen Hauptphase des einphasigen Motors und ein Organ (8) zum Vergleich des gemessenen Wertes des genannten Phasenabweichungswinkels mit einem bestimmten Schwellenwert oder Einstellwert aufweist und dazu ausgebildet ist. bei Überschreitung dieses Schwellenwertes oder Einstellwertes ein Korrektursignal an einen einphasigen Spannungsregler (23) zu senden, dessen Ausgang (U_{M}) den einphasigen Elektromotor speist, und daß der genannte Spannungsregler (23) eine Zerhacker-Oszillatorschaltung (24, 25), beispielsweise eine durch Gate-Impulse gesteuerte Halbleiterschaltung, die dazu ausgebildet ist. getaktete Leitungsimpulse zu erzeugen, deren Dauer (t_{c}) in Abhängigkelt vom gemessenen Wert des Phasenabweichungswinkels geregelt wird, sowie eine Frellaufschaltung (26) aufweist, die die Stetigkeit der durch die Wicklungen des Motors fließenden Wechselstromstärke sicherstellt, so daß man für die Hauptphase (16) ein stabiles und treues Maß für den Phasenabwelchungswinkel erhält.

14. Vorrichtung nach Anspruch 13, **dadurch gekennzeichnet**, daß der bestimmte Schwellenwert oder Einstellwert durch eine Karte oder eine Speicherschaltung in Abhängigkeit von der Ausgangsspannung des einphasigen Spannungsreglers (23) gegeben ist.

15. Vorrichtung nach Anspruch 13. **dadurch gekennzeichnet**, daß sie mehrere vorgegebene und aufeinanderfolgende Schwellenwerte oder Einstellwerte für cos ϕ [bzw. für den Phasenabwelchungswinkel ϕ] aufweist, die mit abnehmenden Spannungswerten am Ausgang des einphasigen Spannungsreglers (23) abnchmen, (bzw: für den Winkel ϕ zunehmen) und die jeweils einem Regelbereich für cos ϕ (oder für den Winkel ϕ) zwischen den zulässigen minimalen und maximalen Spannungswerten am Ausgang (U_{M}) des einphasigen Spannungsreglers entsprechen.

16. Verfahren zur Steuerung der Wechselstromversorgung des Elektromotors einer Pumpe oder einer anderen Fluidmaschine, bei dem der gemessene Phasenabweichungswinkel des Stromes in bezug auf die Spannung wenigstens einer elektrischen Versorgungsphase des Motors mit einem Bezugswert verglichen wird. **dadurch gekennzeichnet**, daß man den gemessenen Phasenabweichungswinkel mit einem Schwellenwert vergleicht, der dem Leerlauf oder dem freiströmenden Betrieb der Pumpe entspricht, und daß man, nach einer Verzögerungsphase für das Anlaufen des Motors, die elektrische Versorgung abschneidet. wenn der gemessene Phasenabweichungswinkel den Schwellenwert erreicht.

17. Vorrichtung zur Regelung der Stromversorgung eines Elektromotors einer Motor/Pumpengruppe zum automatischen Abpumpen von in einem Behältnis gesammelter Flüssigkeit, nach dem Verfahren gemäß Anspruch 16. **dadurch gekennzeichnet**, daß zwischen dem Netz (51) und dem genannten Motor (41) ein Ein/Aus-Schalter (55) eingefügt ist, der einerseits auf ein Einschaltsignal anspricht, das von einem Detektor (59) für den Pegel (N) der Flüssigkeit im Behältnis (30) ausgesandt wird, und andererseits auf ein Ausschaltsignal anspricht. das von einem Vergleichsorgan (57) ausgesandt wird, das den Phasenabweichungswinkel des Stromes in bezug auf die Spannung wenigstens einer Versorgungsphase des Elektromotors mit einem Schwellenwert vergleicht. der im wesentlichen dem Leerlauf des Elektromotors entspricht, wobei das Einschaltsignal auch an ein Organ (65) zur Verzögerung der Weiterleitung des eventuellen Ausschaltsignals oder zum zeitweisen Aufrechterhalten der Stromversorgung des Motors beim Anlaufen übermittelt wird.

18. Vorrichtung nach einem der Ansprüche 13 bis 15 und 17. **dadurch gekennzeichnet**, daß ein Verzögerungsorgan (14, 27, 65), dessen Verzögerungszeit im wesentlichen wenigstens der Dauer der Anlaufphase des Elektromotors (M, M', 41) entspricht, zwischen dem Ausgang des Vergleichsorgans (8, 56) und dem Schalter (4, 55) oder Spannungsregler (23) eingefügt ist, um während der genannten Verzögerungszeit die Weiterleitung des Ausgangssignals des Vergleichsorgans (8. 56) zum Schalter {4. 55) oder zum Spannungsregler (23) zu sperren.

## Claims

1. A method for regulating the supply to a single phase asynchronous electric motor of the type with a main phase and a permanent auxiliary phase, in which the angle of phase shift of current with respect to voltage of said phase is measured and the supply to said motor is regulated as a function of the phase shift angle value thus measured, **characterised in that** the supply voltage of the motor is controlled using an oscillating circuit employing sinewave chopping with reconstruction of continuity of the current sinewave by a freewheel circuit, regulation controlling the duration of conducting chopping pulses so as to provide a faithful measurement of said angle of phase shift of current with respect to voltage thus regulated.

2. The method according to claim 1, **characterised in that** the auxiliary phase is a permanent auxiliary phase using a capacitor and in that the phase shift angle is measured on the main phase of said motor.

3. The method according to claim 2, **characterised in that** the auxiliary phase is permanently supplied with mains voltage and in that the supply to the main phase is controlled as a function of the phase shift value measured on said main phase.

4. The method according to any one of claims 1-3, **characterised in that**, upon starting said electric motor, a time delay is set at least equal to the normal starting time of the motor and during which control of the supply of said motor is disenabled.

5. The method according to any one of claims 1-4, **characterised in that** the motor supply is controlled so as to keep the phase shift angle, within the limits of physical possibility of the circuit, at a substantially constant value.

6. The method according to any one of claims 1-4, **characterised in that** the supply to the motor is controlled so as to keep the phase shift angle, within the limits of physical possibility of the circuit, at a value higher than a threshold value.

7. The method according to any one of claims 1 to 6, **characterised in that** the motor supply is controlled so as to maintain, within the limits of physical possibility of the circuit, a relation determined by a map or memory circuit, or a mapped relation, between the motor feed voltage and said phase shift angle.

8. The method according to any one of claims 1-3, **characterised in that** control is performed by interrupting the motor supply voltage when the phase shift angle measured exceeds a threshold value substantially corresponding to free no load running of said motor.

9. Application of the method according to one of claims 1 to 8 to the control of an electric motor for a pump by comparing the measured phase shift angle with a reference value specific to said pump.

10. The application of the method according to any one of claims 1 to 8 to the control of an electric drive motor for a rotating machine for a fluid such as a pump by comparing a measured phase shift angle with a threshold value corresponding to no load running of said machine and interruption of the electrical supply of said motor when said measured phase shift angle reaches said threshold value.

11. The application of the method according to any one of claims 1 to 8 to the control of a single phase drive motor for a rotary machine for a fluid, such as a pump, by comparing a measured phase shift angle with a determined threshold or set value corresponding to a minimum regulated value of phase shift angle measured on the main phase of said single-phase motor.

12. The application of the method according to claim 11 to the control of a single phase drive motor for a rotary machine for a fluid whereby the determined threshold or set value is given by a map or memory circuit as a function of the supply voltage of said motor.

13. Apparatus for regulating the supply of an asynchronous single-phase electric motor with a permanent auxiliary phase using a capacitor, for driving a rotary pressure and/or flow generator according to the method set out in one of claims 1 to 8, **characterised in that** control means inserted between a single phase mains circuit and said motor, include a unit (7) for measuring current phase shift angle with respect to voltage (or cos ϕ) of the single main phase of the single-phase motor, and a unit (8) for comparing the value of said phase shift angle with a determined threshold or set value, and adapted to send, should the value of said threshold or set value be exceeded, a correction signal to a single-phase voltage regulator (23) the output (U_{M}) of which supplies said single-phase electric motor and in that said voltage regulator (23) includes a chopped oscillating circuit (24, 25), for example a semiconductor circuit driven by gate pulses, suitable for producing time conduction pulses the duration of which (t_{c}) is regulated as a function of the measured phase shift angle value, as well as a freewheel circuit (26) ensuring continuity of alternating current passing through the windings of said motor, so as to dispose of, for said main phase (16), a measurement that is stable and faithful to the phase shift angle.

14. The apparatus according to claim 13, **characterised in that** the determined threshold or set value is given by a map or memory circuit as a function of a voltage at the output of said voltage regulator (23).

15. The apparatus according to claim 13, **characterised in that** several predetermined and successive threshold or set values are provided for cos ϕ (or, respectively, the phase shift angle ϕ) which are decreasing (or, respectively, increasing) values for angle ϕ for decreasing voltage values at the output from said single-phase voltage regulator (23) and which each correspond to a regulation range for cos ϕ (or angle ϕ) between maximum and minimum admissible voltage values at the output (U_{M}) of the single phase voltage regulator.

16. A method for alternating current supply control of the electric motor of a pump or other fluid machine in which the measured value of current phase shift angle with respect to voltage is compared, for at least one electric supply phase of said motor, with a reference value, **characterised in that** the measured phase shift angle is compared with a threshold value corresponding to no-load running of said pump and the electric supply to said motor is interrupted when the measured phase shift angle reaches said threshold value after a start-up time delay for said motor.

17. Apparatus for regulating the electric motor supply of a motor-driven pump for automatically draining the liquid collected in a vessel according to the method of claim 16, **characterised in that** an on-off switch (55) is inserted between the mains supply circuit (51) and said motor (41), said switch (55) being responsive, firstly, to a start-up signal issued by a level (N) detector (59) of the liquid in said vessel (30) and, secondly, to a stop signal sent from a comparator (57) between current phase shift angle and voltage for at least one supply phase of said electric motor and a threshold value substantially corresponding to no-load running of said electric motor, said starting signal being also sent to a timer (65) for possible transmission of the stop signal or delayed holding of the supply of said motor when starting.

18. The apparatus according to one of claims 13-15 and 17, **characterised in that** a timer (14,27,65) the delay time of which substantially corresponds to at least the time for said electric motor (M, M',41) to start is inserted between the output of said comparator (8, 56) and the switch (4,55) or the voltage regulator (23) in order to disenable, during said time delay, transmission of the comparator (8, 56) output signal to said switch (4, 55) or voltage regulator (23).
